# FASCICULE DE BREVET EUROPEEN

(11) **EP 1 791 266 B1**
(45) Date de publication et mention de la délivrance du brevet: **21.07.2010**
(21) Numéro de dépôt: 06291779.4
(22) Date de dépôt: 16.11.2006
(51) Int. Cl.: H04B 1/69, H04L 7/04

(54) **Récepteur d'impulsions d'un signal de type ultra large bande et procédé associé**
Ultrabreitbandiger Pulssignalempfänger und zugehöriges Verfahren
UWB signal pulse receiver and related method

(30) Priorité: 23.11.2005 FR 0511862
(43) Date de publication de la demande: 30.05.2007
(73) Titulaire: Commissariat à l'Énergie Atomique et aux Énergies Alternatives, 75015 Paris (FR)
(72) Inventeur: De Rivaz, Sébastien, 73800 Montmelian (FR); Pezzin, Manuel, 38000 Grenoble (FR); Ouvry, Laurent, 38420 Le Versoud (FR)
(74) Mandataire: Bonnans, Arnaud

(56) Documents cités:
- EP-A- 1 482 648
- WO-A-01/76086
- GB-A- 2 229 055
- O'DONNEL I ET AL: "An integrated, low power, ultra-wideband transceiver architecture for low-rate, indoor wireless systems" WCNC. IEEE WIRELESS COMMUNICATIONS AND NETWORKING CONFERENCE, XX, XX, 4 septembre 2002 (2002-09-04), pages 1-8, XP002269840
- PEZZIN M ET AL: "ULTRA WIDEBAND: THE RADIO LINK OF THE FUTURE ULTRA LARGE BANDE: LA LIAISON RADIO DU FUTUR" ANNALES DES TELECOMMUNICATIONS - ANNALS OF TELECOMMUNICATIONS, GET LAVOISIER, PARIS, FR, vol. 58, no. 3/4, mars 2003 (2003-03), pages 464-506, XP001170096 ISSN: 0003-4347

## Description

L'invention concerne un récepteur d'impulsions d'un signal de type ultra large bande et un procédé associé.

Une technique de transmission d'un flux d'informations à haut débit consiste à utiliser une modulation d'impulsion ultra large bande (généralement dénommée UWB de l'anglais *"Ultra Wide Band'*), selon laquelle on émet une séquence d'impulsions dont une caractéristique (par exemple l'amplitude, la position temporelle ou la phase des impulsions) forme une représentation codée de l'information à transmettre. Ces impulsions sont transmises avec une période de répétition moyenne prédéterminée, généralement dénommée PRP de l'anglais *"Pulse Repetition Period".*

Un système de transmission utilisant ces principes est par exemple décrit dans la demande de brevet EP 1 482 648.

Lors de la réception des signaux électromagnétiques, ce document propose de ramener les signaux analogiques reçus en bande de base au moyen de mélangeurs, avant de les convertir en signaux numériques à traiter au moyen d'échantillonneurs.

Sur ce point, la demande de brevet EP 1 298 811 propose au contraire d'échantillonner le signal électromagnétique dès réception, après simple traitement au moyen d'un étage d'entrée fréquentiellement linéaire comportant pour l'essentiel un amplificateur faible bruit, sans traitement fréquentiel de démodulation du signal pour le ramener en bande de base.

Si elle permet d'éviter la présence des mélangeurs, cette solution implique en contrepartie un échantillonnage à fréquence très élevée afin de respecter le critère bien connu de Nyquist et ainsi de récupérer dans tous les cas l'intégralité du signal sous forme numérique pour traitement.

Du fait de cette contrainte, l'utilisation de cette solution à échantillonnage direct des signaux parait inappropriée dans le cas de la transmission de flux d'informations à plus bas débit, par exemple entre 1 kbps et 10 Mbps. La solution utilisant les mélangeurs, telle que décrite dans la demande de brevet EP 1 482 648, permet en effet dans ce cas de réduire de manière très conséquente la fréquence d'échantillonnage utilisée.

La dérive des horloges entre deux impulsions pose également problème dans le cas des débits relativement faible : avec une horloge classique, le décalage entre deux impulsions peut entraîner une perte de synchronisation qui empêche une corrélation correcte du signal. (Par exemple, pour un débit typique de 250 kbps, la durée séparant deux impulsions est typiquement de l'ordre de 4 µs au cours desquelles une horloge classique de glissement 20 ppm dérive de 80 ps alors que la corrélation d'une impulsion de fréquence centrale f_{C} égale à 4 GHz nécessite pour la synchronisation une précision de l'ordre de 1/(4f_{C}), soit 60 ps.)

A l'encontre du préjugé présentant comme inappropriée la solution à échantillonnage directe pour des débits relativement faibles, l'invention propose un récepteur de signaux électromagnétiques transmis dans une bande de fréquence ayant une limite supérieure prédéterminée et représentant un flux d'informations au moyen d'une modulation d'impulsions à fréquence moyenne de répétition prédéterminée, caractérisé par un étage d'entrée recevant les signaux d'une antenne, comprenant un filtre passe-bande et appliquant un traitement sans changement de fréquence auxdits signaux, et un échantillonneur des signaux traités par l'étage d'entrée avec une fréquence d'échantillonnage multiple entier de la fréquence moyenne de répétition et inférieure à ladite limite supérieure.

Bien que la fréquence d'échantillonnage ne respecte pas le critère de Nyquist et que le signal échantillonné ne permettrait donc pas la reconstruction totale du signal reçu, la pluralité de signaux échantillonnés par période moyenne de répétition permet d'extraire le signal du bruit.

L'étage d'entrée peut comprendre un filtre passe bande, ce qui permet de limiter les signaux transmis à l'échantillonneur à ceux situés dans la bande fréquence mentionnée ci-dessus.

La fréquence d'échantillonnage est par exemple inférieure au cinquième de ladite limite supérieure, de sorte qu'elle est inférieure d'un ordre de grandeur à la fréquence de Nyquist, ce qui entraîne un allègement important des contraintes par rapport aux systèmes classiques utilisant la fréquence de Nyquist.

Par ailleurs, la fréquence d'échantillonnage est par exemple supérieure au double de la bande passante du filtre passe-bande.

Le récepteur peut également comprendre des moyens de sélection aptes à transmettre une partie sélectionnée des signaux échantillonnés à destination d'un module de corrélation, ce qui permet de limiter la charge des traitements ultérieurs.

Les signaux échantillonnés au cours d'une période de répétition moyenne sont par exemple regroupés en un nombre prédéterminé de tranches et ladite partie sélectionnée des signaux échantillonnés peut alors correspondre à des tranches déterminées.

Des moyens peuvent alors permettre de déterminer les tranches sélectionnées sur la base de la présence de signaux dans les tranches correspondantes au cours d'une phase de synchronisation, ce qui permet de limiter les traitements lors de la phase de réception de données aux seules tranches contenant le signal impulsionnel.

Un module de corrélation est, selon un mode de réalisation pratique, apte à mettre en oeuvre une auto-corrélation des signaux échantillonnés.

Par ailleurs, afin d'améliorer le rapport signal à bruit, le module de corrélation peut être configuré pour recevoir des signaux échantillonnés d'un module d'intégration.

Le module de corrélation est par exemple apte à générer un résultat échantillonné sur un bit.

Un module de décision reçoit par exemple le produit du module de corrélation. Selon une forme de réalisation possible, un module de filtrage est interposé entre le module de corrélation et le module de décision.

Afin de réduire la complexité du système, l'échantillonneur est par exemple apte à échantillonner les signaux traités sur un nombre de niveaux inférieur ou égal à 4.

L'invention propose également un procédé de réception de signaux électromagnétiques transmis dans une bande de fréquence ayant une limite supérieure prédéterminée et représentant un flux d'informations au moyen d'une modulation d'impulsions à fréquence moyenne de répétition prédéterminée, caractérisé en qu'il comprend une étape d'échantillonnage des signaux reçus à travers un étage d'entrée comprenant un filtre passe-bande et appliquant un traitement sans changement de fréquence (fréquentiellement linéaire) auxdits signaux, avec une fréquence d'échantillonnage multiple entier de la fréquence moyenne de répétition et inférieure à ladite limite supérieure.

Un tel procédé peut comprendre des caractéristiques optionnelles correspondant à celles évoquées précédemment à propos du récepteur, et posséder de la sorte les avantages qui en découlent.

D'autres caractéristiques et avantages de l'invention apparaîtront à la lumière de la description qui suit, faite en référence aux figures annexées dans lesquelles :
- la figure 1 représente les éléments principaux d'un récepteur conforme aux enseignements de l'invention ;
- la figure 2 représente un premier exemple de circuit de traitement pour le récepteur de la figure 1 ;
- la figure 3 représente un second exemple de circuit de traitement pour le récepteur de la figure 1 ;
- la figure 4 représente un émetteur adapté à échanger des données avec le récepteur de la figure 1 ;
- la figure 5 donne une illustration schématique des différents découpages des ensembles d'échantillons utilisés dans la description ;
- La figure 6 représente un troisième exemple de réalisation de l'invention.

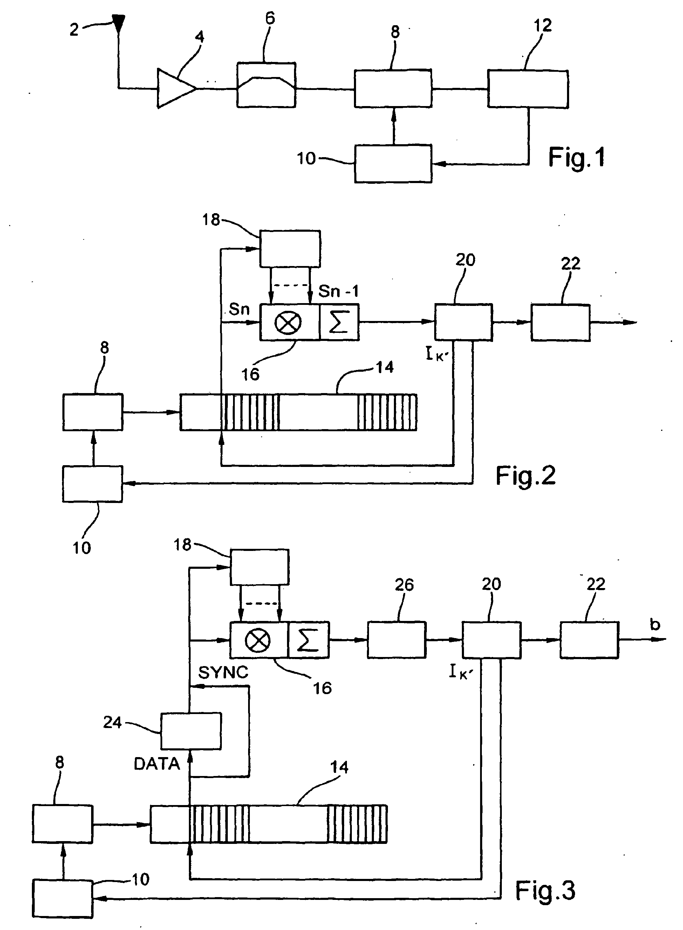

La figure 1 représente les éléments principaux d'un récepteur conforme aux enseignements de l'invention.

Un tel récepteur est destiné à la réception de signaux ultra large bande (ou UWB) formés par la répétition d'une impulsion très brève (de durée en général inférieure à quelques ns, typiquement inférieure à 2 ns), modulée en amplitude, avec une période moyenne de répétition PRP relativement longue, typiquement supérieure à 100 ns, et de toute façon supérieure à 2 ns. Dans l'exemple décrit ici, on utilise une période PRP de 250 ns (ce qui correspond à une fréquence f_{PRP} = 4 MHz).

Dans de tels systèmes de transmission, la très courte durée de l'impulsion entraîne un très fort étalement spectral du signal jusqu'à des fréquences très élevées : l'énergie est en général concentrée autour d'une fréquence centrale f_{C} de l'ordre de plusieurs GHz (par exemple 4 GHz) avec une largeur de bande de l'ordre au moins du ½ GHz (par exemple 1 GHz), ce qui donne un signal ayant une fréquence maximale f_{MAX} de l'ordre de plusieurs GHz (en général supérieure à 4 GHz, ici de 4,5 GHz).

Le récepteur représenté à la figure 1 comprend une antenne 2 qui reçoit les signaux électromagnétiques et les transmet à un amplificateur faible bruit 4. Les signaux amplifiés traversent ensuite un filtre basse bande 6 adapté aux impulsions à recevoir, c'est-à-dire ici avec une fréquence centrale f_{c} égale 4 GHz et une bande passante de 1 GHz.

Le signal filtré est reçu par un convertisseur analogique-numérique 8 (ou CAN) qui travaille, grâce notamment à une horloge 10, à une fréquence d'échantillonnage fₑ multiple de la fréquence moyenne de répétition des impulsions f_{PRP}, soit fₑ = α. f_{PRP}, où α est un nombre entier. On prend par exemple ici α = 500 et ainsi fₑ = 2 GHz.

On remarque que la fréquence d'échantillonnage fₑ ainsi utilisée est inférieure à la fréquence de Nyquist f_{Nyquist} qui serait nécessaire à la reconstruction parfaite du signal échantillonné, dont on rappelle qu'elle vaut : f_{Nyquist} = 2.f_{MAX}, soit ici 9 GHz.

Le convertisseur analogique-numérique 8 transforme ainsi le signal reçu et filtré en un flux d'échantillons numériques à la fréquence fₑ. Chaque échantillon est codé sur un nombre prédéterminé de bits, par exemple 1 bit, 1,5 bits (c'est-à-dire 3 niveaux logiques : -1, 0, +1) ou plusieurs bits.

Le flux d'échantillons est transmis à un circuit de traitement numérique 12 dont un exemple est décrit à présent en référence à la figure 2.

La figure 2 représente un exemple de circuit de traitement numérique d'un récepteur conforme aux enseignements de l'invention.

Sur la figure 2, on a représenté à nouveau pour la clarté de l'exposé le convertisseur analogique-numérique 8 et l'horloge 10 déjà mentionnés à propos de la figure 1.

Le flux d'échantillons numériques générés par le convertisseur analogique-numérique 8 est reçu dans un module 14 apte à sélectionner des tranches d'échantillons comme expliqué en détail plus bas. Ce module de sélection 14 regroupe les échantillons en ensembles de n échantillons (ensembles dénommés dans la suite "tranches").

Le rapport déjà mentionné entre la fréquence d'échantillonnage fₑ et la fréquence moyenne de répétition des impulsions dans le signal reçu f_{PRP} est choisi tel qu'à une période moyenne de répétition PRP correspondent K tranches, c'est-à-dire que : PRP = K.n.Tₑ, où Tₑ est la période d'échantillonnage égale à 1/fₑ. On a de ce fait en utilisant la relation précédente a = K.n.

Le nombre d'échantillons par tranche peut varier selon les applications, par exemple entre 1 et 400. On peut utiliser des valeurs faibles lorsqu'une synchronisation fine est exigée. En général on utilise toutefois un nombre d'échantillons n compris entre 10 et 50.

Le module de sélection 14 transmet les échantillons des tranches d'une part à un module de corrélation 16 et d'autre part à une mémoire 18.

La mémoire 18 transmet quant à elle au module de corrélation 16 les n échantillons de la tranche correspondante dans le symbole précédent qui a été mémorisée à un instant antérieur.

Ainsi, les moyens de corrélation 16 effectuent le produit de corrélation (ou produit scalaire) des échantillons d'une tranche donnée d'un symbole Sₙ et de la même tranche dans le symbole précédent Sₙ₋₁. On réalise donc une auto-corrélation du signal.

On remarquera ici que chaque symbole est décrit par un nombre prédéterminé N d'impulsions, reçues par conséquent sur un nombre identique de périodes moyennes de répétition PRP. Dans le cas où chaque symbole est décrit par une impulsion (présente par conséquent sur une seule période de répétition PRP), la mémoire 18 transmet donc au moyen de corrélation 16 les n échantillons d'une tranche avec un retard égal à la période moyenne de répétition PRP. Dans le cas où chaque symbole est au contraire décrit par N impulsions, les échantillons sont mémorisés pendant une durée égale à N.PRP.

Le résultat du produit de corrélation est transmis à un module de décision 20 qui détermine si un signal est présent dans la tranche concernée en fonction du résultat du produit de corrélation pour cette tranche.

Un circuit de traitement additionnel peut éventuellement être interposé entre le module de décision 20 et les moyens de corrélation 16 de façon à prétraiter le signal issu des moyens de corrélation 16 en vue de la décision dans le module 20, comme décrit en référence à la figure 3.

Lorsqu'un signal est détecté dans une tranche, le module de décision 20 indique également la valeur du signal détecté et la transmet à un décodeur (ou *"demapper"*) 22 qui en déduit l'information transmise et la soumet à des étages ultérieurs du récepteur pour traitement.

Un tel récepteur fonctionne en deux phases : une première phase de synchronisation et une seconde phase de réception des données. Ces deux phases sont par exemple mises en oeuvre lors de la transmission d'une trame physique constituée d'un train d'impulsions qui définit à la fois un préambule correspondant à l'étape de synchronisation et les données à transmettre.

Lors de la phase de synchronisation, le module de sélection 14 transmet toutes les tranches au module de corrélation 16 et à la mémoire 18. Par ailleurs, quel que soit le nombre N d'impulsions utilisées pour décrire chaque symbole, la mémoire 18 génère un retard d'une durée égale à la période moyenne de répétition PRP, de telle sorte que chaque tranche est corrélée avec la tranche correspondante reçue au cours de la période PRP précédente. Autrement dit, si on nomme kᵢ une tranche d'indice i, la corrélation est effectuée lors de la phase de synchronisation entre chaque tranche kᵢ et la tranche correspondante dans la période précédente : k_{i-K}.

Pendant cette phase de synchronisation, la sortie du module de corrélation 16 peut être quantifiée sur 1 bit afin de simplifier le circuit de prise de décision.

Le module de décision 20 reçoit ainsi le résultat de l'auto-corrélation pour chaque tranche d'une période et détermine ainsi un nombre restreint K' de tranches consécutives sur lesquelles s'étend la plus grande partie de l'énergie du signal, c'est-à-dire au cours desquelles l'impulsion étalée par le canal de transmission a été reçue.

Une information I_{K'} qui indique les K' tranches concernées est alors transmise au module de sélection 14 pour utilisation lors de la réception des données comme décrit à présent.

Lors de la phase de réception des données, le module de sélection, pour chaque période PRP, ne transmet au module de corrélation 16 et à la mémoire 18 que les K' tranches déterminées lors de l'étape de synchronisation comme il vient d'être décrit.

Les moyens de corrélation 16 appliquent alors à ces K' tranches le traitement déjà mentionné plus haut, à savoir le produit de corrélation entre chacune des K' tranches et la tranche correspondante du symbole précédent.

Sur la base du résultat de ces K' produits de corrélation, le module de décision 20 peut décider de manière robuste la valeur du signal transmis au cours de la période PRP concernée, puisqu'il a été au préalable déterminé que ce signal était présent dans ces K' tranches.

Il est par exemple possible de définir un niveau de seuil sur les K résultats du produit de corrélation issus de la phase de synchronisation permettant de sélectionner K' tranches parmi les K tranches totales puis de cumuler les K' résultats de corrélation issus de la phase de transmission des données correspondant au K' tranches sélectionnées et enfin de prendre une décision sur le signa de ce cumul.

On pourrait également afin d'améliorer les performances pondérer chacun des K' résultats des produits de corrélations sélectionnés issus de la phase de transmission des données par les K' résultats du produit de corrélation issus de la phase de synchronisation avant de les cumuler et de prendre une décision sur le signe de ce cumul.

En variante, on pourrait ne pas cumuler les K' résultats du produit de corrélation issus de la phase de transmission des données mais utiliser K' décisions individuelles, prises sur le signe de chacun de K' cumuls et déduire le signe du résultat global du vecteurs de K' décision (les K' décisions individuelles sont par exemple à valeurs dans {-1 ; +1} et le signe du résultat global est par exemple le signe de la somme de ces K' décisions individuelles).

Enfin, on peut noter que, pendant la phase de transmission des données, il est possible de permuter les blocs 20 et 26 afin de réduire fortement la complexité.

Dans ce cas, les K' résultats du produit de corrélation issus de la phase de transmission des données (qu'ils soient pondérés ou non par les K' résultats du produit de corrélation issus de la phase de synchronisation) sont cumulés pour fournir une unique valeur au module 26 de décodage L, à la fréquence 1/(N*PRP).

La figure 3 représente un second exemple de circuit de traitement 12 d'un récepteur conforme aux enseignements de l'invention.

Les éléments identiques à ceux de l'exemple de circuit précédent décrits en référence à la figure 2 conservent une référence identique et ne seront pas décrits à nouveau.

Dans ce mode de réalisation, un module d'intégration 24 est interposé entre le module de sélection 14 et le module de corrélation 16. Pendant la phase de réception des données, le module d'intégration 24 accumule les échantillons correspondant dans les N périodes PRP comme décrit plus loin.

Ce module d'intégration 24 est donc intéressant en particulier lorsque les symboles sont décrits sur un nombre N d'impulsions strictement supérieur à 1.

On peut d'ores et déjà remarquer que le module d'intégration 24 est de préférence court-circuité lors de la phase de synchronisation (dont le but est la détermination des tranches contenant l'impulsion au cours d'une période PRP donnée, alors que le module d'intégration 24 vise, au cours de la réception des données, à augmenter le rapport signal à bruit et la sensibilité des échantillons par l'intégration du signal mesuré à un instant donné sur plusieurs périodes PRP successives).

Le circuit représenté à la figure 3 comprend en outre, interposé entre le module de corrélation 16 et le module de décision 20, un module de filtrage 26 adapté au code qui permet de transformer les résultats du produit de corrélation issus du module de corrélation en un signal facilement identifiable par le module de décision 20, comme expliqué dans la suite.

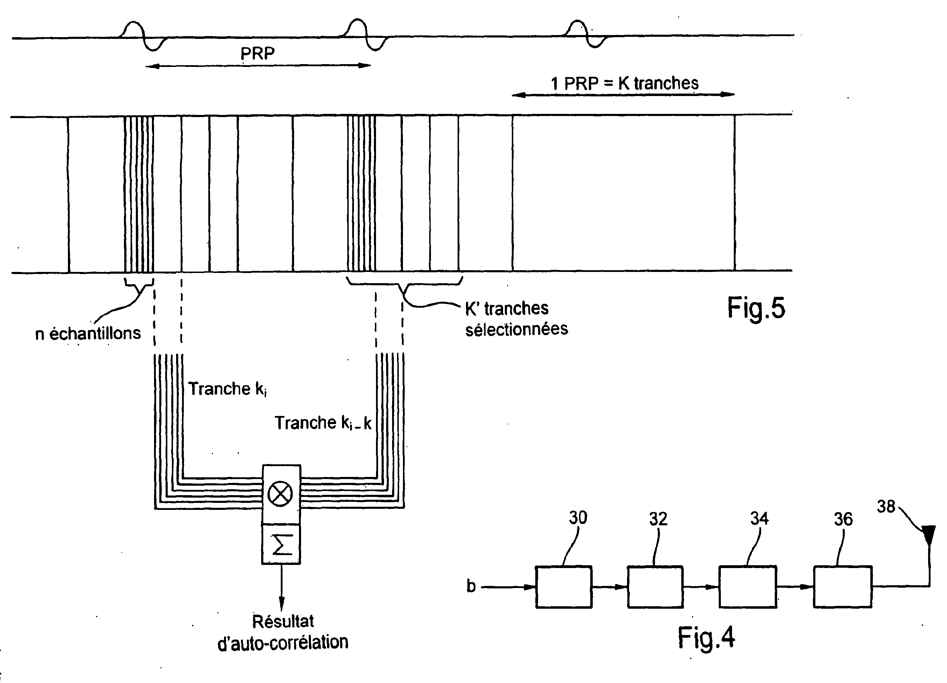

Le fonctionnement du circuit de la figure 3 va à présent illustré plus en détail sur la base d'un exemple de transmission de données suite à un codage des signaux tel que réalisé par l'émetteur représenté à la figure 4.

Dans l'émetteur représenté à la figure 4, un flux d'informations composé de bits b est appliqué à l'entrée d'un codeur L 30 qui code l'information avec un rendement 1/L et applique le flux codé L à l'entrée d'un codeur différentiel 32.

Le codeur L 30 peut être de divers types, tels que par exemple fournir L répétitions du bit reçu en entrée. Un codage de polarité peut en outre être appliqué aux L répétitions dans le codeur L.

En variante, on pourrait ne pas utiliser de codeur L (c'est-à-dire prendre L = 1) et appliquer ainsi le flux d'informations binaires b directement à l'entrée du codeur différentiel 32.

Dans l'émetteur représenté à la figure 4, le flux d'informations codé L généré par le codeur L 30 est comme déjà mentionné appliqué à l'entrée du codeur différentiel 32 qui convertit le flux d'informations reçu en un flux d'informations binaires dont la variation éventuelle de polarité dépend de la valeur du bit dans le flux reçu. Ainsi, selon un exemple possible, un bit de valeur -1 dans le flux binaire avant codage différentiel implique un changement d'état dans le flux codé par le codeur différentiel 32, alors qu'un bit de valeur +1 dans le flux avant codage différentiel implique une conservation de la valeur binaire dans le flux codé par le codeur différentiel 32.

Le flux binaire après codage différentiel est appliqué à un codeur N 34 qui réalise un codage de rendement 1/N, par exemple N répétitions de la valeur reçue en entrée. (On peut également utiliser une solution sans un tel codeur, ce qui revient à considérer le cas N=1.)

Enfin, on peut penser à appliquer en outre une technique de type *"Time Hopping"* (nom couramment utilisé pour désigner un codage de position par saut temporel pseudo-aléatoire).

Le flux d'informations généré par le codeur N 34 est appliqué à l'entrée d'un générateur d'impulsions 36 qui émet à la fréquence f_{PRP} des impulsions dont la polarité est déterminée par le flux binaire en entrée.

Un exemple numérique qui permet de bien comprendre la fonctionnement du circuit émetteur de la figure 4 et le suivant, avec L = 2 et N = 3:
- séquence de 4 bits d'informations b : 0 1 1 1 ;
- codage NRZI transformant O en -1 et 1 en +1 ;
- après un codage L de type +1 -1, on obtient en sortie du codeur 30 la séquence : - 1 +1 +1 -1 +1 -1 +1 -1 ;
- après codage différentiel dans le codeur différentiel 32, on obtient (en considérant que la valeur initiale ou information vide vaut +1) : +1 -1 -1 -1 +1 +1 -1 -1 +1 ;
- après codage par le codeur N 34 (ici un codage de répétition), les impulsions générées avec une polarité qui dépend de la séquence reçue en entrée sont donc les suivantes : +1 +1 +1 -1 -1 -1 -1 -1 -1 -1 -1 -1 +1 +1 +1 +1 +1 +1 -1 -1 -1 -1 -1 -1 +1 +1 +1.

On va à présent décrire la réception de tels signaux au moyen du récepteur illustré à la figure 3 et dont les éléments principaux ont été décrits ci-dessus.

Comme déjà mentionné à propos de la figure 2, la transmission s'effectue par trames physiques comprenant un préambule pour la synchronisation du récepteur, puis les données d'informations à transmettre (en général séparées du préambule par un délimiteur).

On pourrait également transmettre un postambule pour permettre par exemple la re-synchronisation des horloges d'émission et de réception.

La transmission d'une trame débute donc, comme déjà indiquée à propos de la figure 2, par une phase de synchronisation.

Durant cette phase de synchronisation, le signal reçu est échantillonné après filtrage par le filtre passe bande 6 à la fréquence fₑ au moyen du convertisseur analogique-numérique 8. La fréquence d'échantillonnage fₑ est comme déjà mentionnée égale à K.n.f_{PRP}, de telle sorte que le flux binaire en sortie du convertisseur 8 peut être découpé en K tranches consécutives de n échantillons par le module de sélection 14, qui transmet chacune de ces tranches de n échantillons directement au module de corrélation 16 et à la mémoire 18, en contournant ainsi le module d'intégration 24 comme illustré par la flèche SYNC sur la figure 3.

Chaque tranche de n échantillons est alors corrélée dans le module de corrélation 16 avec la tranche correspondante reçue au cours de la période PRP précédente (c'est-à-dire avec les n échantillons reçus à un instant antérieur d'une durée PRP), et ce pour les N impulsions décrivant un symbole.

Cela revient en pratique à envoyer une séquence de synchronisation de S symboles, soit à émettre une séquence connue de M'=SxNxL impulsions qu'il va falloir identifier. Il y a donc à l'émission retranscription logicielle de la séquence connue de symboles constituant le préambule codés par le codeur N, puis par le codeur différentiel, puis par le codeur L en une seule séquence de longueur M' ; cette retranscription est fournie au module 26 comme décrit ci-dessous, le module de décodage L26 agissant dans un mode *"synchronisation"* afin qu'il soit capable de décoder une séquence connue sur M'impulsions.

Le flux émis par le module de corrélation 16 est donc un flux d'informations constitué d'une valeur autocorrélée pour chacune des K tranches de chaque période PRP (les valeurs numériques émises en sortie du module de corrélation ont donc une fréquence de K.f_{PRP}).

Comme déjà vu, le flux en sortie du module de corrélation 16 est appliqué à l'entrée d'un module de filtrage 26 adapté au codage L utilisé dans le système de transmission comme précédemment décrit. Le flux filtré émis en sortie du module de filtrage 26 est appliqué à l'entrée du module de décision 20 dont le rôle dans cette phase de synchronisation est de déterminer la présence d'un signal dans chacune des tranches, par exemple par dépassement d'un seuil par les valeurs relative à la tranche concernée (seuil qui dans le cas du codage L peut se définir par un pourcentage de la valeur L).

En général, le signal (c'est-à-dire l'impulsion) s'étale sur une pluralité de tranches consécutives (notamment du fait de l'étalement par le canal). Pendant la phase de synchronisation, le module de décision 20 permet ainsi de déterminer quelles tranches consécutives contiennent une partie significative de l'énergie et de transmettre une information I_{K}, qui désigne ces K' tranches particulières au module de sélection 14.

Une fois la phase de synchronisation effectuée au moyen du préambule de la trame physique reçue, on peut procéder à la réception des signaux d'informations transmis comme suit.

Comme précédemment, les signaux électromagnétiques reçus par l'antenne et filtré par le filtre passe bande 6 sont échantillonnés à la fréquence fₑ, puis transmis au module de sélection 14 qui découpe ce flux d'informations à la fréquence fₑ en K tranches de n échantillons à partir de l'information de synchronisation fournie par le module de décision 20 qui indique l'instant d'arrivée de la première donnée.

Parmi ces K tranches, le modules de sélection 14 ne transmet en sortie (ici à destination du module d'intégration 24 comme représenté par la flèche DATA en figure 3) que les échantillons relatifs aux K' tranches indiquées comme celles contenant l'essentiel du signal par le module de décision 20 lors de l'étape de synchronisation décrite ci-dessus.

Dans cette phase de réception des informations transmises, les tranches de n échantillons sont transmises au module d'intégration 24 qui additionne un à un les n échantillons d'une tranche donnée dans chacune de N périodes PRP (les valeurs sommées étant a *priori* identiques grâce au codage N mentionné ci-dessus, ce qui permet d'augmenter le rapport signal à bruit du système).

Après sommation échantillon par échantillon des N tranches dans le module d'intégration 24, chaque tranche (toujours composée de n échantillons qui représentent chacun l'intégration de N échantillons) est transmise au module de corrélation 16 et à la mémoire 18 afin de réaliser une auto-corrélation du signal comme déjà indiqué à propos de la figure 2.

On peut remarquer ici que la mise en oeuvre de l'auto-corrélation (c'est-à-dire en pratique la corrélation de l'impulsion reçue avec l'impulsion précédente) réalise intrinsèquement le décodage associé au codage différentiel. L'utilisation du codage différentiel au moyen du codeur différentiel 32 lors de l'émission est en effet particulièrement adaptée au récepteur autocorrélé décrit ici.

Les résultats de l'auto-corrélation issus du module 16 sont alors transmis au module de filtrage 26. Selon un mode de réalisation avantageux, le module de corrélation est apte à cumuler les résultats d'auto-corrélation des K' tranches en une seule information à destination du module de filtrage 26. Le module de filtrage 26 procède ainsi au décodage L du train de valeurs qu'il reçoit et transmet le résultat du décodage au module de décision 20, qui transmet à son tour l'information au décodeur 22 (ou *"demapper"*) qui transforme le train de valeurs qu'il reçoit en un flux d'informations binaires correspondant aux bits d'informations b émis par l'émetteur de la figure 4.

En reprenant l'exemple précédent, sur la base des impulsions émises comme indiquées plus haut, on obtient quand les conditions de transmission sont bonnes :
- après intégration dans le module d'intégration 24, la séquence suivante : +1 -1 -1 -1 +1 +1 -1 -1 +1 ;
- puis en sortie du module de corrélation 16, du fait de l'auto-corrélation différentielle (ce qui revient à faire le produit de deux symboles successifs) : -1 +1 +1 -1 +1 -1 +1 -1 ;
- cette séquence donne à travers le décodeur L du module de filtrage 26 : -1 +1 +1 +1 ;
- cette séquence est transformée par le décodeur 22 en la suite de bits : 0 1 1 1, qui correspond bien à la séquence initiale de 4 bits d'informations.

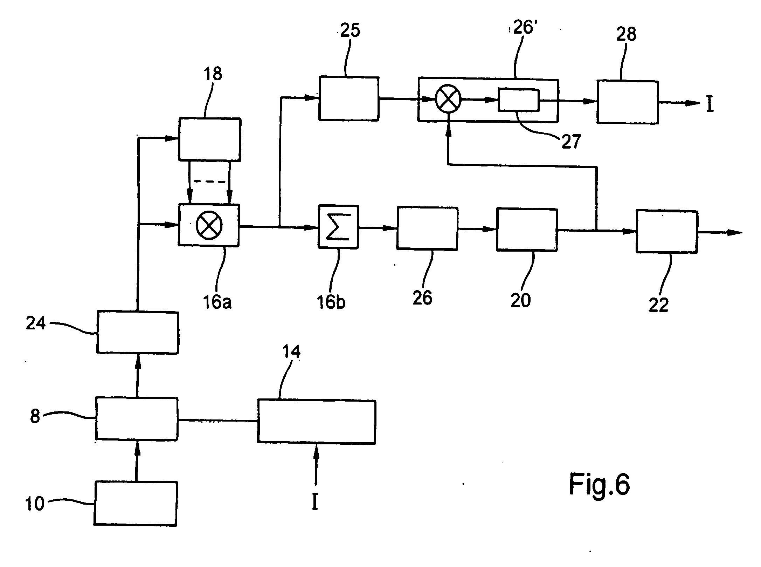

Selon une variante représentée en figure 6, l'estimation de l'instant d'arrivée peut également se faire en parallèle de la transmission de données sur les impulsions utilisées pour transmettre des données afin d'affiner l'estimation de l'instant d'arrivée : il faut alors prévoir une adaptation du module 26 qui est une sorte de décodeur dont le code est issue de la connaissance des données reçues.

Dans ce cas, puisque l'estimation de l'instant d'arrivée se fait sur les données parallèlement à la réception de celles-ci, une mise en parallèle du circuit est nécessaire pour l'estimation de l'instant d'arrivée. Un exemple de réalisation de la prise de décision sur l'estimation du temps d'arrivée effectuée en parallèle de la réception des données par un circuit dédié est représenté en figure 6 :
Par rapport aux exemples précédents, le bloc 16 est coupé en deux : les multiplieurs 16a d'un côté et le sommateur 16b de l'autre. On exploite K" (typiquement K"=2) tranches consécutives de n échantillons, sélectionnées à l'issue de la phase de synchronisation.

La sortie de la multiplication 16a, soit n*K" échantillons (parmi lesquels le premier trajet sera recherché), est fournie à un module de recherche du premier trajet, et précisément à un filtre numérique 25 passe bas de type *"filtre à réponse impulsionnelle finie",* éventuellement décimateur. Son rôle est de *"lisser"* le signal pour améliorer l'immunité de ce module vis-à-vis des dérives d'horloge.

La profondeur N_{coef} de ce filtre 25 est très faible (typiquement n_{coef} est entre 2 et 4), ce qui en fait un bloc de très faible complexité. Un exemple de ce filtre est une moyenne glissante de 4 coefficients par exemple mis à 0.5 pour un gain normalisé, soit Filtre=[0.5 0.5 0.5 0.5].

Typiquement le facteur f_{dec} de décimation est égal soit à 1 (pas de décimation), soit à n_{coef}:
- lorsque f_{dec}=1, cela revient à effectuer une moyenne glissante sur la sortie de multiplication (16a),
- lorsque f_{dec}=n_{coef}, cela revient à découper la tranche de n*K" échantillons en M*K" sous tranches de n_{coef} échantillons (M=n/n_{coef}).

La première option sur la valeur de f_{dec}(f_{dec}=1) permet de gagner en précision tandis que la seconde (f_{dec}=n_{coef}) permet de gagner en complexité.

Les n*K échantillons sélectionnés sont pondérés par la sortie du bloc 20 pour être cumulés à nouveau, à la fréquence f_{PRP}/(N*L). Quand le nombre d'accumulations nécessaires à une détection correcte du premier trajet est atteint, une décision est prise sur ces résultats cumulés pour donner l'information fine I de position du premier trajet.

On remarque par ailleurs que, pour tous les modes de réalisation étudiés, l'utilisation de tranches composées chacune de n échantillons permet d'intégrer les signaux sur chaque intervalles de durée n.Tₑ, ce qui permet de s'affranchir des problèmes de dérive d'horloge en dimensionnant correctement n, et ainsi d'utiliser une horloge 10 de coût modéré.

Par ailleurs, l'estimation du temps d'arrivée grossière (synchronisation) ou fine (estimation du temps d'arrivée) peut permettre de détecter un glissement relatif des horloges entre l'émetteur et le récepteur.

Afin de mesurer ce glissement, on peut mesurer la durée perçue entre deux instants d'arrivée (par exemple entre deux trames successives ou entre deux séquences d'impulsions codées à l'intérieur de la même trame) et comparer cette mesure avec le temps escompté a *priori* entre ces deux instants d'arrivée. Cette mesure du glissement relatif de l'horloge récepteur par rapport à l'horloge émetteur peut permettre d'asservir une horloge par rapport à l'autre en l'accélérant ou en la ralentissant afin de réduire ce glissement, comme représenté schématiquement au moyen d'une flèche en direction de l'horloge 10 sur les figures.

L'invention n'est pas limitée aux exemples de réalisation de celle-ci qui viennent d'être décrits.

## Revendications

1. Récepteur de signaux électromagnétiques transmis dans une bande de fréquence ayant une limite supérieure prédéterminée et représentant un flux d'informations au moyen d'une modulation d'impulsions à une fréquence moyenne de répétition prédéterminée, **caractérisé par** :
- un étage d'entrée (4, 6) recevant les signaux d'une antenne (2), comprenant un filtre passe-bande et appliquant un traitement sans changement de fréquence auxdits signaux ;
- un échantillonneur (8) des signaux traités par l'étage d'entrée avec une fréquence d'échantillonnage multiple entier de ladite fréquence moyenne de répétition prédéterminée et inférieure à ladite limite supérieure prédéterminée.

2. Récepteur selon la revendication 1, **caractérisé en ce que** la fréquence d'échantillonnage est supérieure ou égale au double de la bande passante du filtre passe-bande.

3. Récepteur selon la revendication 1 ou 2, **caractérisé en ce que** la fréquence d'échantillonnage est inférieure au cinquième de ladite limite supérieure prédéterminée.

4. Récepteur selon l'une des revendications 1 à 3, **caractérisé par** des moyens de sélection (14) aptes à transmettre une partie sélectionnée des signaux échantillonnés à destination d'un module de corrélation (16).

5. Récepteur selon la revendication 4; **caractérisé en ce que**, les signaux échantillonnés au cours d'une période de répétition moyenne étant regroupés en un nombre prédéterminé de tranches, ladite partie sélectionnée des signaux échantillonnés correspond à des tranches déterminées.

6. Récepteur selon la revendication 5, **caractérisé par** des moyens pour déterminer les tranches sélectionnées sur la base de la présence de signaux dans les tranches correspondantes au cours d'une phase de synchronisation.

7. Récepteur selon l'une des revendications 1 à 6, **caractérisé en ce qu'**un module de corrélation (16) est apte à mettre en oeuvre une auto-corrélation des signaux échantillonnées.

8. Récepteur selon la revendication 7, **caractérisé en ce que** le module de corrélation (16) est configuré pour recevoir des signaux échantillonnés d'un module d'intégration (24).

9. Récepteur selon la revendication 7 ou 8, **caractérisé par** un module de décision (20) apte à recevoir le produit du module de corrélation (16).

10. Récepteur selon la revendication 9, **caractérisé en ce qu'**un module de filtrage adapté à un codage L (26) est interposé entre le module de corrélation (16) et le module de décision (20).

11. Récepteur selon l'une des revendications 7 à 10, **caractérisé en ce que** le module de corrélation est apte à générer un résultat échantillonné sur 1 bit.

12. Réception selon l'une des revendications 1 à 11, **caractérisé en ce que** l'échantillonneur est apte à échantillonner les signaux traités sur un nombre de niveaux inférieur ou égal à 4.

13. Récepteur selon l'une des revendications 1 à **caractérisé en ce que** les signaux transmis sont du type ultra large bande.

14. Procédé de réception de signaux électromagnétiques transmis dans une bande de fréquence ayant une limite supérieure prédéterminée et représentant un flux d'informations au moyen d'une modulation d'impulsions à une fréquence moyenne de répétition prédéterminée, **caractérisé en qu'**il comprend une étape d'échantillonnage des signaux reçus à travers un étage d'entrée comprenant un filtre passe-bande appliquant un traitement sans changement de fréquence auxdits signaux, avec une fréquence d'échantillonnage multiple entier de ladite fréquence moyenne de répétition prédéterminée et inférieure à ladite limite supérieure prédéterminée.

15. Procédé selon la revendication 14, **caractérisé en ce que** la fréquence d'échantillonnage est supérieure ou égale au double de la bande passante du filtre passe-bande.

16. Procédé selon la revendication 14 ou 15, **caractérisé en ce que** la fréquence d'échantillonnage est inférieure au cinquième de ladite limite supérieure prédéterminée.

17. Procédé selon l'une des revendications 14 à 16, **caractérisé par** une étape de sélection d'une partie des signaux échantillonnés pour transmission à un module de corrélation.

18. Procédé selon la revendication 17, **caractérisé en ce que**, les signaux échantillonnés au cours d'une période de répétition moyenne étant regroupés en un nombre prédéterminé de tranches, ladite partie sélectionnée des signaux échantillonnés correspond à des tranches déterminées.

19. Procédé selon la revendication 18, **caractérisé par** une étape de détermination, pendant une phase de synchronisation, des tranches sélectionnées sur la base de la présence de signaux dans les tranches correspondantes.

20. Procédé selon l'une des revendications 14 à 19, **caractérisé par** une étape d'auto-corrélation des signaux échantillonnés.

21. Procédé selon la revendication 20, **caractérisé par** une étape d'intégration des signaux échantillonnés préalable à l'étape d'auto-corrélation.

## Claims

1. Receiver of electromagnetic signals transmitted in a frequency band having a predetermined upper limit and representing a stream of information by means of a modulation of pulses at a predetermined average pulse repetition frequency, **characterized by**:
- an input stage (4, 6) receiving the signals from an antenna (2), comprising a band-pass filter and applying processing without changing frequency to said signals;
- a sampler (8) of signals processed by the input stage with a sampling frequency that is an integer multiple of said predetermined average pulse repetition frequency and less than said predetermined upper limit.

2. Receiver according to claim 1, **characterized in that** the sampling frequency is greater than or equal to twice the pass-band of the band-pass filter.

3. Receiver according to claim 1 or 2, **characterized in that** the sampling frequency is less than one fifth of said predetermined upper limit.

4. Receiver according to any one of claims 1 to 3, **characterized by** selection means (14) adapted to transmit a selected portion of the sampled signals to a correlation module (16).

5. Receiver according to claim 4, **characterized in that**, the signals sampled during an average pulse repetition period being grouped into a predetermined number of segments, said selected portion of the sampled signals corresponds to particular segments.

6. Receiver according to claim 5, **characterized by** means for determining the selected segments on the basis of the presence of signals in the corresponding segments during a synchronization phase.

7. Receiver according to any one of claims 1 to 6, **characterized in that** a correlation module (16) is adapted to auto-correlate the sampled signals.

8. Receiver according to claim 7, **characterized in that** the correlation module (16) is configured to receive sampled signals from an integration module (24).

9. Receiver according to claim 7 or 8, **characterized by** a decision module (20) adapted to receive what is produced by the correlation module (16).

10. Receiver according to claim 9, **characterized in that** a filter module adapted to L coding (26) is disposed between the correlation module (16) and the decision module (20).

11. Receiver according to any one of claims 7 to 10, **characterized in that** the correlation module is adapted to generate a result sampled on one bit.

12. Reception according to any one of claims 1 to 11, **characterized in that** the sampler is adapted to sample the processed signals over a number of levels less than or equal to 4.

13. Receiver according to any one of claims 1 to 12, **characterized in that** the signals transmitted are of the ultra wide band type.

14. Method of receiving electromagnetic signals transmitted in a frequency band having a predetermined upper limit and representing a stream of information by means of a modulation of pulses at a predetermined average pulse repetition frequency, **characterized in that** it comprises a step of sampling signals received through an input stage comprising a band-pass filter applying processing without changing frequency to said signals at a sampling frequency that is an integer multiple of said predetermined average pulse repetition frequency and less than said predetermined upper limit.

15. Method according to claim 14, **characterized in that** the sampling frequency is greater than or equal to twice the pass-band of the band-pass filter.

16. Method according to claim 14 or 15, **characterized in that** the sampling frequency is less than one fifth of said predetermined upper limit.

17. Method according to any one of claims 14 to 16, **characterized by** a step of selection of a portion of the sampled signals for transmission to a correlation module.

18. Method according to claim 17, **characterized in that**, the signals sampled during an average pulse repetition period being grouped into a predetermined number of segments, said selected portion of the sampled signals corresponds to particular segments.

19. Method according to claim 18, **characterized by** a step, during a synchronization phase, of determining the selected segments on the basis of the presence of signals in the corresponding segments.

20. Method according to any one of claims 14 to 19, **characterized by** a step of auto-correlation of the sampled signals.

21. Method according to claim 20, **characterized by** a step of integration of the sampled signals before the auto-correlation step.

## Patentansprüche

1. Empfänger für elektromagnetische Signale, die in einem Frequenzband mit einer vorbestimmten Obergrenze übertragen werden und einen Fluss von Informationen darstellen, und zwar mit Hilfe einer Modulation von Impulsen mit einer vorbestimmten mittleren Wiederholungsfrequenz **gekennzeichnet durch**:
- eine Eingangsstufe (4, 6), die die Signale einer Antenne (2) empfängt, ein Bandpassfilter umfasst und an den Signalen eine Bearbeitung ohne Frequenzänderung vornimmt;
- ein Organ (8) zum Abtasten der **durch** die Eingangsstufe bearbeiteten Signale mit einer Abtastfrequenz, die ein ganzzahliges Vielfaches der vorbestimmten mittleren Wiederholungsfrequenz ist und kleiner als die vorbestimmte Obergrenze ist.

2. Empfänger nach Anspruch 1, **dadurch gekennzeichnet, dass** die Abtastfrequenz größer als oder gleich dem Zweifachen der Bandbreite des Bandpassfilters ist.

3. Empfänger nach Anspruch 1 oder 2, **dadurch gekennzeichnet, dass** die Abtastfrequenz kleiner als ein Fünftel der vorbestimmten Obergrenze ist.

4. Empfänger nach einem der Ansprüche 1 bis 3, **gekennzeichnet durch** Wählmittel (14), die in der Lage sind, einen ausgewählten Teil der abgetasteten Signale zu einem Korrelationsmodul (16) zu übertragen.

5. Empfänger nach Anspruch 4, **dadurch gekennzeichnet, dass** die während einer mittleren Wiederholungsperiode abgetasteten Signale in einer vorbestimmten Anzahl von Blöcken zusammengefasst sind und der ausgewählte Teil der abgetasteten Signale vorbestimmten Blöcken entspricht.

6. Empfänger nach Anspruch 5, **gekennzeichnet durch** Mittel zum Bestimmen der ausgewählten Blöcke auf der Basis des Vorhandenseins von Signalen in den entsprechenden Blöcken während einer Synchronisierungsphase.

7. Empfänger nach einem der Ansprüche 1 bis 6, **dadurch gekennzeichnet, dass** ein Korrelationsmodul (16) in der Lage ist, eine Selbstkorrelation der abgetasteten Signale einzusetzen.

8. Empfänger nach Anspruch 7, **dadurch gekennzeichnet, dass** das Korrelationsmodul (16) ausgebildet ist, um abgetastete Signale von einem Integrationsmodul (24) zu empfangen.

9. Empfänger nach Anspruch 7 oder 8, **gekennzeichnet durch** ein Entscheidungsmodul (20), das in der Lage ist, das Produkt des Korrelationsmoduls (16) zu empfangen.

10. Empfänger nach Anspruch 9, **dadurch gekennzeichnet, dass** ein an eine L-Codierung angepasstes Filtermodul (26) zwischen das Korrelationsmodul (16) und das Entscheidungsmodul (20) eingesetzt ist.

11. Empfänger nach einem der Ansprüche 7 bis 10, **dadurch gekennzeichnet, dass** das Korrelationsmodul in der Lage ist, ein abgetastetes Resultat auf 1 Bit zu erzeugen.

12. Empfänger nach einem der Ansprüche 1 bis 11, **dadurch gekennzeichnet, dass** das Abtastorgan in der Lage ist, die bearbeiteten Signale auf einer Anzahl von Pegeln zu bearbeiten, die kleiner als oder gleich 4 ist.

13. Empfänger nach einem der Ansprüche 1 bis 12, **dadurch gekennzeichnet, dass** die übertragenen Signale vom Typ Ultrabreitband sind.

14. Verfahren zum Empfang von elektromagnetischen Signalen, die in einem Frequenzband mit einer vorbestimmten Obergrenze übertragen werden und einen Fluss von Informationen darstellen, und zwar mit Hilfe einer Modulation von Impulsen mit einer vorbestimmten mittleren Wiederholungsfrequenz, **dadurch gekennzeichnet, dass** es einen Schritt der Abtastung der Signale umfasst, die über eine Eingangsstufe empfangen werden, die ein Bandpassfilter umfasst, das an den Signalen eine Bearbeitung ohne Frequenzänderung vornimmt, und zwar mit einer Abtastfrequenz, die ein ganzzahliges Vielfaches dieser vorbestimmten mittleren Wiederholungsfrequenz und kleiner als die vorbestimmte Obergrenze ist.

15. Verfahren nach Anspruch 14, **dadurch gekennzeichnet, dass** die Abtastfrequenz größer als oder gleich dem Zweifachen der Bandbreite des Bandpassfilters ist.

16. Verfahren nach Anspruch 14 oder 15, **dadurch gekennzeichnet, dass** die Abtastfrequenz kleiner als ein Fünftel der vorbestimmten Obergrenze ist.

17. Verfahren nach einem der Ansprüche 14 bis 16, **gekennzeichnet durch** einen Schritt des Auswählens eines Teils der abgetasteten Signale zur Übertragung zu einem Korrelationsmodul.

18. Verfahren nach Anspruch 17, **dadurch gekennzeichnet, dass** die während einer mittleren Wiederholungsperiode abgetasteten Signale in einer vorbestimmten Anzahl von Blöcken zusammengefasst sind und der ausgewählte Teil der abgetasteten Signale vorbestimmten Blöcken entspricht.

19. Verfahren nach Anspruch 18, **gekennzeichnet durch** einen Schritt der Bestimmung der ausgewählten Blöcke während einer Synchronisationsphase auf der Basis des Vorhandenseins von Signalen in den entsprechenden Blöcken.

20. Verfahren nach einem der Ansprüche 14 bis 19, **gekennzeichnet durch** einen Schritt der Selbstkorrelation der abgetasteten Signale.

21. Verfahren nach Anspruch 20, **gekennzeichnet durch** einen dem Selbstkorrelationsschritt vorhergehenden Schritt der Integration der abgetasteten Signale.
